# EUROPÄISCHE PATENTSCHRIFT

(11) **EP 2 847 259 B1**
(45) Veröffentlichungstag und Bekanntmachung des Hinweises auf die Patenterteilung: **28.04.2021**
(21) Anmeldenummer: 13716953.8
(22) Anmeldetag: 14.03.2013
(51) Int. Cl.: C08J 7/12, C08F 8/06

(54) **POLYMEROBERFLÄCHEN MIT ERHÖHTER OBERFLÄCHENENERGIE UND VERFAHREN ZUR HERSTELLUNG DERSELBEN**
POLYMERIC SURFACES HAVING AN INCREASED SURFACE ENERGY AND PROCESS FOR PRODUCING SAID SURFACES
SURFACES DE POLYMÈRES AVANT UNE ÉNERGIE DE SURFACE ACCRUE ET PROCÉDÉ POUR PRODUIRE LESDITES SURFACES

(30) Priorität: 07.05.2012 DE 102012008789
(43) Veröffentlichungstag der Anmeldung: 18.03.2015
(73) Patentinhaber: Thomas Nickert Druckveredelung GmbH, 10245 Berlin (DE); IOT - Innovative Oberflächentechnologien GmbH, 04318 Leipzig (DE)
(72) Erfinder: MEHNERT, Reiner, 04416 Markkleeberg (DE); PREISSLER, Herbert, 12349 Berlin (DE); RIEDEL, Carsten, 04416 Markkleeberg (DE); NICKERT, Thomas, 10245 Berlin (DE)
(74) Vertreter: Köhler, Tobias
(86) Internationale Anmeldenummer: PCT/EP2013/000767
(87) Internationale Veröffentlichungsnummer: WO 2013/167214

(56) Entgegenhaltungen:
- EP-A1- 2 198 980
- US-A1- 2004 228 971
- US-A1- 2010 035 496
- ARENHOLZ E ET AL: "Laser-induced surface modification and structure formation of polymers", APPLIED SURFACE SCIENCE, ELSEVIER, AMSTERDAM, NL, Bd. 69, Nr. 1-4, 2. Mai 1993 (1993-05-02), Seiten 16-19, XP024484794, ISSN: 0169-4332, DOI: 10.1016/0169-4332(93)90475-Q [gefunden am 1993-05-02]
- PUGMIRE D L ET AL: "SURFACE CHARACTERIZATION OF LASER-ABLATED POLYMERS USED FOR MICROFLUIDICS", ANALYTICAL CHEMISTRY, AMERICAN CHEMICAL SOCIETY, US, Bd. 74, Nr. 4, 15. Februar 2002 (2002-02-15), Seiten 871-878, XP001115835, ISSN: 0003-2700, DOI: 10.1021/AC011026R
- DATABASE WPI Week 200664 Thomson Scientific, London, GB; AN 2006-616239 XP002700106, & JP 2006 219610 A (MURAHARA M) 24. August 2006 (2006-08-24)
- NETRAVALI ANIL N ET AL: "Adhesion promotion in fibers and textiles using photonic surface modifications", JOURNAL OF ADHESION SCIENCE AND TECHNOLOGY, ZEIST, NL, Bd. 24, Nr. 1, 1. Januar 2010 (2010-01-01) , Seiten 45-75, XP009170848, ISSN: 0169-4243, DOI: 10.1163/016942409X12538865055999

## Beschreibung

Die Erfindung betrifft Polymeroberflächen mit erhöhter Oberflächenenergie und ein Verfahren zur Erhöhung der Oberflächenenergie von Polymeroberflächen mit dem Ziel der Verbesserung von Oberflächeneigenschaften wie z.B. Haftung von Lacken, Druckfarben und Klebstoffen, sowie Bedruckbarkeit, Verklebbarkeit und Benetzbarkeit.

Die Oberflächenenergie kann als messbare Größe für die Bindungskräfte an der Oberfläche angesehen werden und ist die
Energie, die aufgewandt werden muss, um einen unendlich ausgedehnten Fest-körper in zwei identische, halb-unendliche Teile zu zerlegen und diese soweit voneinander zu entfernen, dass zwischen ihnen keine Wechselwirkung mehr besteht.
Dabei ist ein einem erste Schritt zum Durchtrennen des Festkörpers in zwei Bausteine Spaltungsenergie aufzuwenden, während in einem zweiten Schritt beide Bausteine soweit voneinander entfernt werden, dass sie sich dabei in neue Gleichgewichtspositionen verschieben können.

Die Nachvernetzung von Polyacrylat- Oberflächen durch Photonen mit Energien von 4 -11 eV ist bekannt und wird z.B. in der Patentschrift DE 10 2008 060 906 A1 beschrieben. Dieses Patent beschreibt in einem Beispiel (Tabelle 2) die Erhöhung der Oberflächenenergie einer UVgehärteten Polyacrylat- Nanokomposit- Beschichtung bei Nachbestrahlung mit Photonen eines 172 nm Excimerstrahlers von 21 auf 23 mN/m.

Nachteilig ist hierbei, dass die Nachbestrahlung mit einem 172 nm Excimerstrahler nur eine unzureichende Erhöhung der Oberflächenenergie bewirkt, welche nicht ausreichend ist, um die Bedruck-, Verkleb- oder Benetzbarkeit der Polymeroberfläche entscheidend zu verbessern.

Um dieses Ziel zu erreichen, sind Oberflächenenergien größer 45 mN/m mit einem polaren Anteil größer 10 mN/m erforderlich.
Der polare Anteil der Oberflächenenergie ist dabei entscheidend für Haftung, Bedruckbarkeit, Verklebbarkeit und Benetzbarkeit.

Die Erhöhung der Oberflächenenergie von z.B. Polyacrylat- und Polymethacrylat-Oberflächen durch die Wahl von stärker polaren monomeren und oligomeren Acrylat- oder Methacrylat- Komponenten ist begrenzt und führt zu Oberflächenenergien der Beschichtung kleiner 45 mN/m mit polaren Anteilen kleiner als 5 mN/m. Wirksame Additive, die den flüssigen Formulierungen mit dem Ziel der Erhöhung der Oberflächenenergie zugesetzt werden können, sind nicht verfügbar.

Die Wirkung von Koronaentladungen, wird z.B. im Softal Report 102d der SOFTAL Corona & Plasma GmbH, Hamburg, beschrieben. Plasma-Entladungen, die beim Anlegen einer ausreichend hohen Spannung an einen gasgefüllten Kondensator mit unsymmetrischen Elektroden auftreten, bilden leitende Kanäle (streamer), die zu einem zeitlich begrenzten elektrischen Kurzschluss führen. Im Entladungskanal entstehen sowohl positive Ionen mit kinetischen Energien bis zu 100 eV als auch Elektronen mit Energien von 12 bis 16 eV. Elektronen und Ionen mit diesen Energien sind in der Lage, in Luft z.B. reaktive Sauerstoff-Spezies wie atomaren Sauerstoff und Ozon bzw. auf der Oberfläche des zu behandelnden Polymeren Radikale und Radikalionen zu erzeugen. Da streamer nur Lebensdauern von einigen 10 ns haben und mit typischen Frequenzen von 10 kHz auftreten, werden Koronaanlagen bei höheren Erregerfrequenzen betrieben.

Die beschriebene Koronabehandlung ist jedoch nicht geeignet, eine wirksame und vor allem langandauernde Erhöhung der Oberflächenenergie von Polyacrylaten, Polymethacrylaten und Vinylpolymeren zu erzielen.
Bei der thermischen Degradation von z. B. Poly(n-butylacrylat) unter Anwesenheit von Sauerstoff entstehen Kohlendioxid, Buten, Butanol und Fragmente der Polymerkette. Mit geringerer Ausbeute entstehen Monomere wie Butylacrylat, niedrigmolekulare Alkane und Alkene, Kohlenmonoxid und Wasserstoff.

/ V.V.Krongauz,M.T.K.Ling, Photo-crosslinked acrylate degradation kinetics, J.Ther.Anal.Calorim. (2009) 96: 715-725/
Analoge Prozesse der oxidativen Degradation der Polymeroberfläche erwartet man bei Elektronen- und Ionenbeschuss des Polymeren bei Anwesenheit von Sauerstoff.
Durch Koronabehandlung wird der polare Anteil der Oberflächenenergie von Polyacrylaten und Polymethacrylaten unmittelbar nach der Behandlung zwar erhöht, die Wirkung lässt jedoch innerhalb einiger Tage stark nach, so dass kein nachhaltiger Effekt erzielt wird. Ursache dieses Effektes kann die Migration niedermolekularer polarer Verbindungen an die Oberfläche und ihr Übergang in die Umgebungsluft sein.
Migration wird jedoch verhindert, wenn die polaren chemischen Gruppen an Polymerketten oder Polymerfragmente gebunden sind. Dann erhält man eine dauerhafte Erhöhung des polaren Anteils der Oberflächenenergie.

Aufgabe der vorliegenden Erfindung ist es daher, Lösungen zu entwickeln, die eine langandauernde Erhöhung der Oberflächenenergie von Polyacrylat- und Polymethacrylat-Oberflächen auf größer/gleich 45 mN/m mit polaren Anteilen größer 10 mN/m erzeugen.

Diese Aufgabe wird durch die erfindungsgemäße Lösung gemäß den Patentansprüchen 1 bis 8 gelöst.

Erfindungsgemäß erfolgt eine Bestrahlung der Polymeroberfläche mit Photonen eines Xe₂-Excimerstahlers in einer Stickstoff-SauerstoffAtmosphäre bei Sauerstoff-Konzentrationen von 0,1 bis 1 Vol%.

Die erfindungsgemäße Lösung soll im Folgenden anhand von Ausführungsbeispielen und zwei Abbildungen näher erläutert werden.

Erfindungsgemäß wird die Polymeroberfläche mit Photonen bestrahlt, die Energien von 6,5 bis 7,8 eV aufweisen. Die Photonenquelle wird so nah wie möglich an die Polymeroberfläche gebracht.

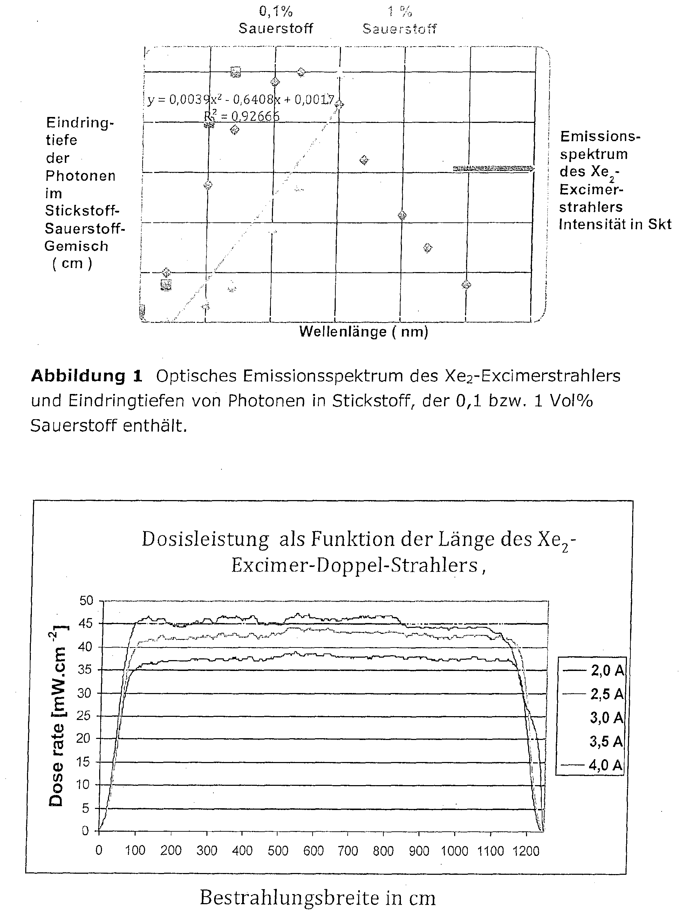

Zwischen der Photonenquelle und der Polymeroberfläche befindet sich ein Stickstoff- Sauerstoff- Gemisch mit Sauerstoffkonzentrationen zwischen 0.1 und 1 Vol.%. Ein Teil der Photonen wird vom Sauerstoff absorbiert. Die restlichen Photonen erreichen die Polymeroberfläche. In Abbildung 1 sind die Eindringtiefen der Photonen in Stickstoff-Sauerstoff-Gemischen mit 0,1 und 1 Vol% Sauerstroff dargestellt.

Photonen mit Energien zwischen 6,5 und 7,8 eV, die von Sauerstoff absorbiert werden, erzeugen durch elektronische Anregung des Sauerstoff- Moleküls atomaren Sauerstoff, der in einer Reaktion mit molekularem Sauerstoff zu Ozon umgesetzt wird. Es ist bekannt, dass Ozon mit Polymeren reagieren und Peroxy- Radiakle bilden kann, die die Degradation von Polymeren an der Oberfläche auslösen können. / S.D.Razumovski, A.A. Kefeli, G.E.Zaikov: European Polymer Journal Volume 7 (1971) p. 275-286/

Die Degradationsprodukte des Polymeren enthalten an der Oberfläche Sauerstoff in Form von polaren chemischen Gruppen. Diese tragen zur Erhöhung des polaren Anteils der Oberflächenenergie bei.

Von den Photonen mit Energien zwischen 6,5 und 7,8 eV, die die Polymeroberfläche erreichen, dringen einige 10 bis 100 nm in das Polymer ein. Durch elektronische Anregung von Molekülzuständen im Polymeren werden Primärprozesse ausgelöst, die letztendlich zur Erzeugung von Polymerradikalen führen.

Polymerradikale reagieren mit dem Sauerstoff des Stickstoff-Sauerstoff-Gemisches zu Peroxyradikalen, die Degradationsprozesse an der Polymeroberfläche auslösen und somit ebenfalls zur Erzeugung polarer chemischer Gruppen und damit zur Erhöhung des polaren Anteils der Oberflächenenergie beitragen.

Als Photonenquellen werden vorteilhaft Excimerstrahler verwendet, die technisch als Linienquellen mit Längen bis zu 2,5m hergestellt werden können. Flächenquellen erhält man durch Zusammenschalten mehrerer Linienquellen.

Als Photonenquelle steht folgender Excimerstrahler zur Verfügung

**Excimer Emissionswellenlänge Photonenenergie Typische Eindringtiefe in Polymeren**

| | **(nm)** | **(eV)** | **(nm)** |
|---|---|---|---|
| Xe₂ | Maximum | von 6,5, | Maximum |
| < 100 | bei 172 | bis 7,8 | bei 7,2 |

Vorteilhaft benutzt man Xe₂-Excimerstrahler, da diese ein breites Emissionsband von 160 bis 185 nm aufweisen. Durch Wahl der Sauerstoffkonzentration im der Bestrahlungszone kann man absichern, dass ausreichend Ozon erzeugt wird aber auch genügend Photonen die Oberfläche des Polymers erreichen. Das Spektrum des Xe₂-Excimerstrahlers und die Eindringtiefe von Xe₂-Excimer-Photonen in einem Stickstoff/ Sauerstoff-Gemisch werden in Abbildung 1 beispielhaft dargestellt.

Das physikalische Wirkprinzip, der Aufbau und die Anwendung von Excimerstrahlern werden z. B. in
1. B. Eliasson, U. Kogelschatz: Appl. Phys. B 46, p.229 (1988
2. U. Kogelschatz: Pure] Appl. Chem. Vol 62, p. 1667 (1990)
3. U. Kogelschatz. Proceedings Thenth Int. Conf. Gas Discharges an their Applications, Vol. II, p. 972 (1992)
4. R. Mehnert, I. Janovsky, A. Pincus: UV & EB Curing Technology and Equipment, Wiley- SITA, London
beschrieben.

Wie Abbildung 1 zeigt, wird z.B. bei einer Sauerstoff-Konzentration von 1 % der kurzwellige Anteil des Excimer-Emissionsspektrums stark absorbiert. Für Photonen im Maximum des Spektrums von 172 nm beträgt die Eindringtiefe ca. 5,5 cm und steigt für Photonen mit Wellenlängen größer als 175 nm auf über 10 cm an.

Erfindungsgemäß wird deshalb die Polymeroberfläche in einer Stickstoff-Sauerstoff- Atmosphäre mit Photonen eines Xe₂-Excimerstrahlers bestrahlt.

Überraschend wurde gefunden, dass die Oberflächenenergie dann maximal erhöht wird, wenn Photonen sowohl vom Sauerstoff in der Gasphase als auch an der Polymeroberfläche etwa zu gleichen Anteilen absorbiert werden.

Beim erfindungsgemäßen Verfahren wird die Polymeroberfläche in einer Bestrahlungskammer unter Spülen der Kammer mit einem Stickstoff-Sauerstoff- Gemisch durch Photonen eines Xe₂-Excimerstrahlers bestrahlt.
Die Bestrahlungszeiten können dabei 0,01 bis 300s, vorzugsweise 0,05 bis 50 s, besonders vorzugsweise 0,1 bis 5 s betragen.
Die Sauerstoff- Konzentrationen können zwischen 0,1 und 2 Vol%, vorzugsweise zwischen 0,2 und 0,5 Vol% betragen.

Die Erfindung bezieht sich im Allgemeinen auf Polymere von Acrylat-, Methacrylat - und Vinylverbindungen.

### Beispiele

### Beispiel 1

Ein UV-härtbarer Acrylat- Nanokomposit- Lack (Hersteller Cetelon Nanotechnik GmbH, Eilenburg, Sa.) wird auf eine 12 µm Folie aus biaxial orientiertem Polypropylen (BOPP) im Tiefdruckverfahren aufgetragen. Das Auftragsgewicht beträgt 3 bis 4 g/m². Die so beschichtete BOPP Folien wird mit einer Geschwindigkeit von 30 m/min durch eine UV-Härtungsanlage gefahren und dort unter Stickstoff ausgehärtet. Die Aushärtung wird mittels Infrarot (ATR)-Spektroskopie über den Umsatz der olefinischen Doppelbindungen gemessen. Der gemessene Umsatz von 93% der Doppelbindungen bedeutet, dass die UV-Härtung als vollständig zu betrachten ist. Die Oberflächenspannung der Beschichtung wird mit einem Kontaktwinkelmessgerät DAS 30 der Fa. Krüss GmbH Hamburg bestimmt.

Man erhält folgende Werte:

| | |
|---|---|
| Oberfächenspannung in mN/m | 41,9 |
| disperser Anteil 37,9 | polarer Anteil 3,9 |

Danach wird die beschichtete Folie in einer Pilotanlage der Fa. IOT GmbH Leipzig bestrahlt, die aus Abwicklung, Bestrahlungskammer mit Xe₂-Excimerstrahler und Aufwicklung besteht. Die Bestrahlungskammer wird mit einem Stickstoff- Sauerstoff- Gemisch gespült, das 0,4Vol% Sauerstoff enthält. Die Sauerstoff- Konzentration wird mittels Nadelventil stabil eingestellt und mit einem Gerät GSM V6 der Fa. Metrotec GmbH Kirchheim gemessen. Die Bahngeschwindigkeit wird auf 30 m/min eingestellt.

Nach der Bestrahlung wird die Oberflächenspannung erneut gemessen. Man erhält folgende Werte:

| | |
|---|---|
| Oberflächenspannung in mN/m | 51 |
| disperser Anteil 39 | polarer Anteil 12 |

### Betrachtung des Ergebnisse bzgl. Beispiel 1

Nach Bestrahlung mit einem Xe₂-Excimerstrahler in einem Stickstoff-Sauerstoff-Gemisch erhöht sich die Oberflächenenergie auf 51 mN/m. Der polare Anteil steigt signifikant von 3,9 auf 12 mN/m und übertrifft damit die erforderlichen 10 mN/m.

### Beispiel 2

Die bestrahlte Probe aus Beispiel 1 wird unter Laborbedingungen gelagert. Gemessen wird die Oberflächenspannung als Funktion der Zeit. Die Ergebnisse sind in Tabelle 1 zusammengestellt

### Betrachtung des Ergebnisses bzgl. Beispiel 2:

Der polare Anteil der Oberflächenspannung ist nach 85 Tagen Lagerung auf 11 mN/m gesunken. Die Oberflächenspannung liegt mit 48 mN/m jedoch deutlich über dem geforderten Wert von 45 mN/m. Der polare Anteil übertrifft die geforderten 10 mN/m.

### Beispiel 3

Die bestrahlte Folie mit erhöhter Oberflächenenergie wird auf einen Druckbogen kaschiert. Aus dem Druckbogen werden Faltschachteln hergestellt. Die Teile der Faltschachteln werden auf der bestrahlten Folie streifenförmig mit Dispersionsklebstoff beschichtet und maschinell bei Produktionsgeschwindigkeiten bis 200 m/min verklebt. Auf eine Vorbehandlung wie z.B. Plasmabehandlung wird verzichtet. Nach einer Lagerzeit von 30s wird ein Schälwiderstand von >200 N/m erreicht.

### Ergebnis bzgl. Beispiel 3:

Mit der erfindungsgemäß bestrahlten Folie werden die geforderten Klebenahtfestigkeiten der Faltschachtelmuster erreicht. Auf eine technisch übliche Vorbehandlung in der Faltschachtelmaschine wie z. B. Plasma- oder Koronabehandlung kann somit verzichtet werden.

### Beispiel 4

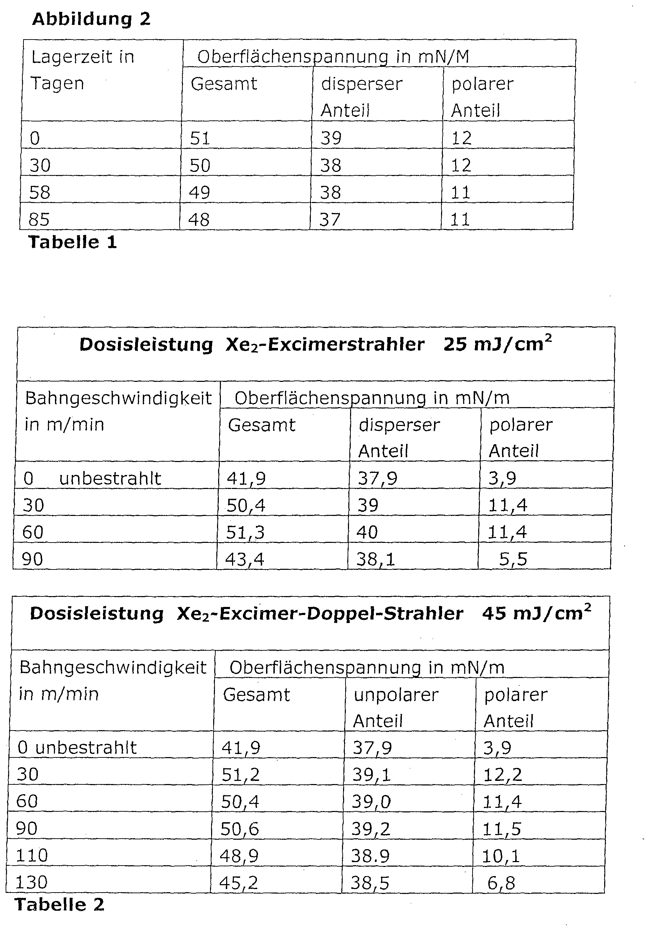

Auf einer Beschichtungsanlage der Fa. finitec performance films GmbH, Berlin wird eine Bestrahlungskammer mit einem Xe₂-Excimerstrahler der Fa. IOT GmbH Leipzig installiert. Die Dosisleistung des Xe₂-Excimerstrahlers beträgt maximal 25 mW/cm2. Wahlweise wird auch ein Xe₂-Excimer-Doppel-Strahler eingesetzt. Damit wird eine Dosisleistung von 45 mW/cm2 erreicht (Abbildung 2).

Die Sauerstoff-Konzentration in der Bestrahlungskammer wird auf 0,5% eingestellt. Bestrahlt wird eine BOPP-Folie mit einer Polyacrylat-Nanokomposit- Beschichtung entsprechend Beispiel 1.

Die Beschichtungsanlage ist für Bahngeschwindigkeiten bis 200 m/min ausgelegt. Untersucht wird die Abhängigkeit der Oberflächenenergie der Beschichtung von der Bahngeschwindigkeit bei Dosisleistungen der Excimerquelle von 25 oder 45 mW/cm2.

Die zusammengefassten Werte sind aus Tabelle 2 ersichtlich

### Betrachtung des Ergebnisses bzgl. Beispiel 4

Unter technischen Bedingungen und dem Einsatz eines Xe₂-Excimer-Doppel-Strahlers mit 45 mW/cm2 Dosisleistung können polare Anteile der Oberflächenenergie von größer 10 mN/m bei Bahngeschwindigkeiten bis zu 110 m/min erreicht werden.

## Patentansprüche

1. Polymeroberfläche auf der Basis von Acrylat- oder Methacrylatverbindungen, **dadurch gekennzeichnet, dass** sie eine Oberflächenenergie von > 45 mN/m mit polaren Anteilen >10mN/m aufweist.

2. Polymeroberfläche auf der Basis von Acrylat- oder Methacrylatverbindungen, nach Anspruch 1, **dadurch gekennzeichnet, dass** die Oberflächenenergie über einen Zeitraum von mindestens drei Monaten stabil bleibt.

3. Verfahren zur Herstellung von Polymeroberflächen nach Anspruch 1, **dadurch gekennzeichnet, dass** diese Oberflächen in einem Stickstoff-Sauerstoff-Gemisch mit Sauerstoffkonzentration zwischen 0,1 und 1 Vol%_und Photonen eines Xe₂-Excimerstrahlers mit Leistungen von 25 oder 45 mW/cm2 bestrahlt werden.

4. Verfahren nach Anspruch 3, **dadurch gekennzeichnet, dass** die Bestrahlung in einer Kammer erfolgt, die mit einem Stickstoff-Sauerstoff-Gemisch mit Sauerstoffkonzentrationen von 0,1 bis 0,5 Vol% gespült wird.

5. Verfahren nach Anspruch 3, **dadurch gekennzeichnet, dass** die Bestrahlung mit Photonen des Xe₂-Exclmerstrahlers mit einer Leistung von 25 oder 45 mW/cm2 bei Bestrahlungszeiten von 0,01 bis 300 s, vorzugsweise 0,05 bis 50 s, besonders vorzugsweise 0,05 bis 5 s erfolgt.

## Claims

1. Polymer surface on the basis of acrylate or methacrylate compounds, **characterized in that** they exhibit surface energies > 45 mN/m with polar components > 10 mN/m.

2. Polymer surface on the basis of acrylate or methacrylate compounds according to Claim 1, **characterized in that** the surface energy remains stable for a period of at least three months.

3. Process for the manufacture of polymer surfaces according to Claim 1, **characterized in that** these surfaces are irradiated in a nitrogen-oxygen mixture with an oxygen concentration between 0.1 and 1% by volume and with photons from an Xe₂ excimer laser with an output of 25 or 45 mW/cm².

4. Process according to Claim 3, **characterized in that** the irradiation is performed in a chamber flushed with a nitrogen-oxygen mixture with an oxygen concentration of 0.1 to 0.5% by volume.

5. Process according to Claim 3, **characterized in that** the irradiation with photons from the Xe₂ excimer laser with an output of 25 or 45 mW/cm2 is performed for an irradiation time of 0.01 to 300 s, preferably 0.05 to 50 s, and especially preferably 0.05 to 5 s.

## Revendications

1. Surface du polymère à base de composés d'acrylate ou de méthacrylate, **caractérisée par le fait qu'**elle présente une énergie de surface > 45 mN/m avec des parties polaires > 10 mN/m.

2. Surface du polymère à base de composés d'acrylate ou de méthacrylate, selon la revendication 1, **caractérisée par le fait que** l'énergie de surface reste stable pendant une période d'au moins trois mois.

3. Procédé pour la préparation de surfaces du polymère selon la revendication 1, **caractérisé par le fait que** ces surfaces dans un mélange azote-oxygène avec une concentration en oxygène comprise entre 0,1 et 1 % en volume et des photons d'un émetteur à excimères Xe₂ sont irradiées à des puissances de 25 ou 45 mW/cm².

4. Procédé selon la revendication 3, **caractérisé par le fait que** l'irradiation s'effectue dans une chambre qui est rincée avec un mélange azote-oxygène ayant des concentrations en oxygène de 0,1 à 0,5 % en volume.

5. Procédé selon la revendication 3, **caractérisé par le fait que** l'irradiation se produit avec des photons de l'émetteur à excimères Xe₂ à une puissance de 25 ou 45 mW/cm² avec des temps d'irradiation entre 0,01 et 300 s, de préférence 0,05 à 50 s, et surtout de préférence 0,05 à 5 s.
